(19) Europäisches Patentamt / European Patent Office / Office européen des brevets

(11) **EP 2 514 917 A1**

(12) **DEMANDE DE BREVET EUROPEEN**

(43) Date de publication:
**24.10.2012 Bulletin 2012/43**

(51) Int Cl.:
***E21B 47/10*** *(2012.01)*

(21) Numéro de dépôt: **12290127.5**

(22) Date de dépôt: **10.04.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **21.04.2011 FR 1101260**

(71) Demandeur: **IFP Energies nouvelles**
**92852 Rueil-Malmaison Cedex (FR)**

(72) Inventeurs:
- **Rouchon, Virgile**
  **92210 Saint-Cloud (FR)**
- **Estublier, Audrey**
  **78590 Noisy Le Roi (FR)**
- **Garcia, Bruno**
  **92500 Rueil Malmaison (FR)**

(54) **Procédé de stockage géologique de gaz par analyses géochimiques de gaz rares dans la phase gaz**

(57) Procédé de stockage géologique d'un gaz comportant une surveillance du stockage par analyses géochimiques de gaz rare présent dans la phase gaz.

Avant injection du gaz contenant du $CO_2$ et au moins un gaz rare, on mesure au sein de ce gaz la fraction molaire du gaz rare et la fraction molaire d'un second gaz rare ou celle du $CO_2$. Puis, on injecte ce gaz dans une formation du sous-sol. Après l'injection, on prélève au moins un échantillon de gaz présent dans une zone du sous-sol susceptible d'être atteinte par le $CO_2$ sous sa forme gazeuse, et l'on mesure au sein de cet échantillon la fraction molaire du gaz rare et la fraction molaire du second gaz rare ou celle du $CO_2$. Enfin, on détermine la fraction de $CO_2$ dissoute à partir des fractions molaires, au moyen de la loi de Henry, de la constante de Henry du CO2 et de la constante de Henry du gaz rare.

EP 2 514 917 A1

**Description**

L'invention concerne le domaine technique du stockage géologique de gaz, tel que le dioxyde de carbone ($CO_2$) ou le méthane, et plus particulièrement la surveillance de site géologique de stockage de ces gaz.

La présente invention propose notamment un procédé de quantification de la masse de gaz dissoute dans la formation du stockage géologique, basée sur une analyse géochimique in-situ.

Les aquifères salins profonds présentent le plus fort potentiel pour le stockage géologique de gaz parmi toutes les formations géologiques envisagées de part leur répartition géographique et leur capacité de stockage théorique. Les gisements appauvris de gaz et d'huile peuvent aussi servir de stockage de gaz.

Le volume du gaz injecté dans une telle formation géologique souterraine est facilement connu par mesure du débit de gaz en tête de puits. Toutefois, le devenir du gaz une fois injecté est beaucoup plus difficile à maîtriser : ce gaz peut migrer verticalement hors de la formation de stockage (dans des couches géologiques plus superficielles, voire jusqu'en surface) ou latéralement dans la formation hôte dans des zones non prévues initialement. De plus, le gaz injecté peut connaître des modifications bio-physico-chimiques au cours du temps susceptibles d'en modifier la pression dans le réservoir. Ces processus peuvent être la solubilisation, la précipitation, la métabolisation biologique et la réactivité chimique. On appelle « gaz injecté » l'espèce moléculaire à stocker ainsi que les impuretés qu'il contient, dans leur forme gazeuse lors de l'injection. On appelle « espèce à stocker » l'espèce moléculaire que l'on souhaite stocker dans le réservoir géologique, excluant les impuretés contenues dans le gaz injecté.

Un suivi le plus complet possible du devenir du gaz injecté doit être réalisé pour être conforme aux réglementations en vigueur, ainsi que pour aider à l'acceptation sociétale de cette technologie. Ce suivi complet doit impliquer la détection et la quantification de fuites hors de la formation géologique de stockage ainsi qu'un bilan massique de l'espèce à stocker dans la formation géologique de stockage.

Prenons l'exemple du $CO_2$, qui est un gaz ayant une solubilité importante, et pouvant former des minéraux en tant que constituant majeur (les carbonates). De ce fait, le $CO_2$ gazeux à pour vocation à changer de phase, ce qui a pour effet d'en stabiliser le stockage. Le $CO_2$ une fois injecté dans un stockage géologique va se stabiliser à la pression du réservoir (étalement du panache, compensation de la pression par soutirage d'eau de formation, etc.). La diminution de la masse de $CO_2$ en phase gaz (solubilisation, précipitation) sera compensée en pression par l'ajustement du volume de gaz (battement de l'aquifère). Il en résulte que la phase gaz du stockage restera composée en majorité de $CO_2$ (composition relative majeure ~ 100%) et à pression constante. Seul le volume de gaz sera amené à varier. Dans ces conditions, le suivi de la quantité de $CO_2$ ayant quitté la phase gaz par mesure de pression, ou par la teneur en $CO_2$ du gaz, est impossible. De ce fait, des techniques complémentaires doivent être à disposition des entités techniques concernées par le stockage de $CO_2$ pour veiller à son intégrité et à la conformité de son évolution.

Pour suivre l'évolution des fluides injectés au sein d'un milieu poreux, de nombreuses techniques ont été développées par les industriels.

Parmi ces techniques, la sismique répétitive, dite sismique 4D, est utilisée dans l'industrie (pétrolière ou environnementale). Une telle technique consiste à réaliser différentes campagnes sismiques, à des moments différents (en général les campagnes sont espacées d'au moins une année). Ainsi, le spécialiste peut suivre l'évolution des fluides du site géologique de stockage. Ces techniques ont été exploitées dans le domaine environnemental pour estimer, à partir des données sismiques, le volume total et la masse totale de $CO_2$ en place dans le sous-sol.

Cependant, ces méthodes ne permettent pas de suivre le bilan massique du $CO_2$ entre son état gazeux et ses autres états, et donc d'évaluer l'efficacité du stockage.

On connaît également du brevet FR2.827.960 une méthode de suivi quantitatif d'un gaz injecté dans un réservoir susceptible de réagir chimiquement avec le milieu d'injection. Cette méthode consiste à injecter dans le réservoir un mélange du gaz potentiellement réactif à quantifier avec une proportion faible d'un gaz traceur dont l'inertie chimique est totale, et à déterminer la variation au cours du temps de la proportion initiale du gaz réactif qui a pu disparaître par transformation, ceci par une mesure de la variation de concentration du gaz traceur dans le mélange.

Cependant, cette méthode ne permet pas de quantifier la quantité de $CO_2$ dissoute indépendamment d'autres phénomènes tels que la précipitation du CO2.

L'objet de l'invention concerne un procédé de stockage de gaz, tel que le dioxyde de carbone ($CO_2$) ou le méthane, comportant une phase de surveillance du devenir du gaz, permettant de quantifier la masse de gaz dissoute. Le procédé se base sur une analyse géochimique in-situ de gaz rares contenus dans la phase gaz d'échantillons du sous-sol.

Le procédé selon l'invention

De façon générale, l'invention concerne un procédé de stockage géologique d'un gaz contenant une espèce à stocker et au moins un gaz rare, dans lequel on injecte dans une formation du sous-sol ledit gaz. Selon le procédé, on surveille le devenir de ladite espèce à stocker dans le sous-sol en réalisant les étapes suivantes :

i. avant ladite injection, on mesure au sein dudit gaz à injecter une fraction molaire dudit gaz rare et une fraction molaire d'une espèce autre que ledit gaz rare, ladite espèce étant un second gaz rare ou l'espèce à stocker ;

ii. après ladite injection, on prélève au moins un échantillon de gaz présent dans une zone du sous-sol susceptible d'être atteinte par l'espèce à stocker sous sa forme gazeuse, et l'on mesure au sein dudit échantillon une fraction molaire dudit gaz rare et une fraction molaire de ladite espèce autre que ledit gaz rare ;

iii. on détermine la fraction de l'espèce à stocker dissoute dans ledit liquide à partir desdites fractions molaires, au moyen de la loi de Henry, de la constante de Henry de l'espèce à stocker $K_{CO2}$ et de la constante de Henry dudit gaz rare $K_i$.

Selon un mode réalisation, on détermine la fraction de l'espèce à stocker dissoute $F^D_{CO2}$ à partir des mesures de fraction molaire du gaz rare et de fraction molaire du second gaz rare, en déterminant le rapport d'un nombre de mole total dans ledit liquide ($N^L$) sur un nombre de mole total dans ledit gaz ($N^G$), au moyen des fractions molaires, puis en utilisant la formule suivante :

$$F^D_{CO2} = \frac{1}{\left( \dfrac{N^L}{N^G . K_{CO2}} + 1 \right)}$$

Selon ce mode de réalisation, on peut déterminer le rapport au moyen de la formule suivante:

$$\frac{N^L}{N^G} = K_i . K_j . \frac{\left( \dfrac{y_i^0}{y_j^0} - \dfrac{y_i}{y_j} \right)}{\left( K_j . \dfrac{y_i}{y_j} - K_i . \dfrac{y_i^0}{y_j^0} \right)}$$

Avec :

o $y_i$ et $y_j$ les fractions molaires dudit gaz rare et dudit second gaz rare dans la phase gaz à un instant t ;

o $y^0_i$ et $y^0_j$ les fractions molaires dudit gaz rare et dudit second gaz rare dans le gaz injecté avant injection ;

o $K_j$ la constante de Henry du second gaz rare.

Selon un mode réalisation, on détermine la fraction de l'espèce à stocker dissous $F^D_{CO2}$ à partir des mesures de fraction molaire du gaz rare et de fraction molaire de l'espèce à stocker, au moyen de la formule suivante :

$$F^D_{CO_2} = \frac{\left( 1 - \dfrac{y_{CO_2}}{y_i} . \dfrac{y_i^0}{y_{CO_2}^0} \right)}{\left( 1 - \dfrac{K_{CO_2}}{K_i} \right)}$$

Avec :

o $y_{CO2}$ et $y_i$ les fractions molaires du l'espèce à stocker et du gaz rare i dans la phase gaz à un instant t ;

o $y^0_{CO2}$ et $y^0_i$ les fractions molaires du l'espèce à stocker et du gaz rare i dans le gaz injecté à l'instant $t_0$ (avant injection).

Selon l'invention, l'espèce à stocker peut être du $CO_2$ ou du méthane, et le gaz rare peut être de l'hélium, du néon, de l'argon, du krypton ou du xénon.

D'autres caractéristiques et avantages du procédé selon l'invention, apparaîtront à la lecture de la description ci-après d'exemples non limitatifs de réalisations, en se référant aux figures annexées et décrites ci-après.

**Présentation succincte des figures**

- la figure 1 montre un schéma d'un stockage de $CO_2$ avec transfert par diffusion.

- la figure 2 illustre l'évolution des solubilités (S) du $CO_2$ et de différents gaz rares (He, Ne, Ar, Kr et Xe) en fonction de la température (T).

- la figure 3 illustre un résultat du procédé selon l'invention : l'axe des abscisses représente la fraction de $CO_2$ dissoute $F^D_{CO2}$ l'axe des ordonnées représente le rapport élémentaire He/Ar dans la phase gaz.

- la figure 4 illustre un résultat du procédé selon l'invention : l'axe des abscisses représente la fraction de $CO_2$ dissoute $F^D_{CO2}$, l'axe des ordonnées représente le rapport élémentaire He/$CO_2$ ou Ar/$CO_2$ dans la phase gaz.

**Description détaillée du procédé**

Le procédé de stockage géologique de gaz selon l'invention, comporte une phase d'injection dans une formation du sous-sol du gaz contenant essentiellement une espèce à stocker (dioxyde de carbone ($CO_2$), méthane...) et au moins un gaz rare (hélium, argon...), et une phase de surveillance du devenir de l'espèce à stocker dans le sous-sol. La formation contient au moins un liquide tel que de l'eau.

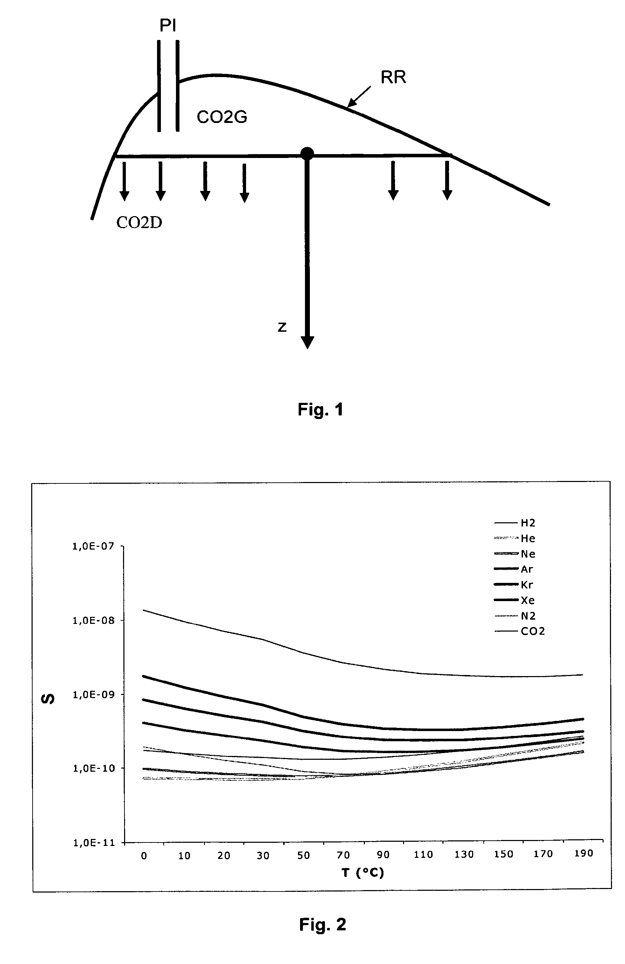

Selon un exemple de réalisation (figure 1), on injecte un gaz contenant essentiellement l'espèce à stocker, du $CO_2$, via un puits injecteur (PI) dans une roche réservoir (RR) d'une formation du sous-sol, le gaz injecté contenant également un gaz rare comme l'hélium. La roche réservoir contenant un fluide, et notamment de l'eau.

Lorsque le $CO_2$ est injecté, il migre dans la formation dans un premier temps principalement sous forme gaz ($CO_2G$) par gravité et/ou due à un gradient de pression existant, jusqu'à s'immobiliser pour les raisons suivantes : disparition de gradient de pression par écoulement, rétention du gaz résiduelle par capillarité, rétention du gaz de manière structurale.

Une fois la phase gaz stabilisée dans les pores, le panache de $CO_2$ a in fine une grande surface horizontale (L est de l'ordre de quelques kms) par rapport à son épaisseur (e est de l'ordre de quelques mètres à quelques centimètres au bout du panache).

Le second phénomène de migration qui prend le relais est la diffusion avec ou non une instabilité gravitaire. Ce type de migration prend sa source à l'interface gaz/eau (INT), par conséquent dessous le panache de $CO_2$ gaz ($CO_2G$) dans la roche réservoir, mais également au-dessus du panache de $CO_2$ à travers la roche couverture. Sous cette interface, on trouve donc du $CO_2$ sous forme dissoute dans de l'eau ($CO_2D$), et transporté par diffusion vers le bas (flèches sur la figure 1).

Le $CO_2$ produit industriellement, et purifié par un procédé de captage, contient des éléments mineurs ou en trace (teneur relative inférieure à 5%). Parmi ces éléments, nous prendrons l'exemple des gaz rares, toujours présents dans des quantités mesurables. Ces éléments traces ont des propriétés physico-chimique différentes de celles du $CO_2$, et vont donc réagir différemment que ce dernier dans un environnement de stockage géologique. Plus particulièrement, leurs solubilités et leurs réactivités chimiques vont être différentes et spécifiques à chaque espèce. L'évolution de la composition du gaz injecté dans le réservoir géologique va être conditionnée par ces différences, et connaissant celles-ci à priori, ces évolutions de composition permettent de quantifier la masse de $CO_2$ ayant changé de phase ou de forme chimique.

La surveillance du devenir du $CO_2$ consiste à estimer 1) la quantité de l'espèce à stocker dissoute dans la formation de stockage, 2) la quantité de $CO_2$ ayant précipitée ou réagie dans cette formation (biologiquement ou physico-chimiquement), et 3) la quantité de $CO_2$ ayant fui hors de cette formation vers un aquifère supérieur. Le premier point est réalisé selon l'invention à partir de mesures de fractions molaires d'au moins un gaz rare, et d'un second gaz rare ou de l'espèce à stocker.

La figure 2 illustre l'évolution en fonction de la température des solubilités du $CO_2$ et de différents gaz rares (He, Ne, Ar, Kr et Xe) en fonction de la température.

On remarque le fort écart de solubilité entre le $CO_2$ et les différents gaz rares, présentant un maximum avec l'He. Les coefficients de Henry pour les gaz rares ont été publiés dans la littérature, par exemple dans le document suivant :

- Shan et Pruess, 2004. EOSN-a new TOUGH2 module for simulating transport of noble gases in the subsurface, Geothermics, 33-521:529

De ce fait, il est connu que les solubilités de gaz rares dans l'eau peuvent-être obtenues à priori en connaissant la température du milieu de stockage.

La solubilité s'exprime par le partitionnement d'une espèce entre deux phases. Selon notre exemple du $CO_2$ et des gaz rares, la solubilité s'exprime par le partitionnement de ces espèces entre l'eau liquide et une phase vapeur riche en $CO_2$.

Le phénomène de solubilité d'une espèce $i$ répond à la loi de Henry :

$$K_i = p_i/x_i)$$

Avec :

- $K_i$ : constante de Henry de l'espèce $i$, *(la solubilité de l'espèce $i$ $S_i = 1/K_i$)*

- $p_i$ : pression partielle de l'espèce $i$ dans la phase gazeuse

- $x_i$ : fraction molaire de l'espèce $i$ dans la phase aqueuse, à l'équilibre La constante de Henry ($K_i$) peut s'écrire un utilisant une expression sans dimension :

$$K_i = y_i / w_i$$

Avec :

$y_i$ : fractions molaires de l'espèce $i$ dans la phase gazeuse

$w_i$ : fractions molaires de l'espèce $i$ dans la phase liquide

Si on considère $n_i$ le nombre de mole de l'espèce i et N le nombre de mole total de la phase considérée (G pour la phase gaz et L pour la phase "liquide" eau), on peut écrire:

$$\left(\frac{n_i}{N}\right)_G = K_i \cdot \left(\frac{n_i}{N}\right)_L$$

En respectant la conservation de la quantité de matière, on applique pour toutes les espèces du système les égalités suivantes (indice T pour le nombre total de moles de l'espèce considéré) :

$$n_i^T = n_i^G + n_i^L$$

$$N^T = N^G + N^L = \sum_i n_i^T = \sum_i \left(n_i^G + n_i^L\right)$$

Ce qui permet d'écrire :

$$\left(\frac{n_i^L}{n_i^T}\right) = \frac{1}{\left(\dfrac{N^L}{N^G.K_i}+1\right)} = F_i^D \tag{1}$$

avec $F^D{}_i$ la fraction dissoute de l'espèce $i$, à l'instant $t$ de l'analyse de la composition du gaz dans le réservoir.

Connaissant à priori $K_i$ dans les conditions du stockage, la quantification de la fraction dissoute nécessite de connaitre le rapport $N^L/N^G$ à l'instant t. L'équation donnant $F^D{}_i$ est indéterminée puisqu'on y trouve deux inconnues que sont $N^L$ et $N^G$. A un instant t, ces deux inconnues définissent les quantités (nombre de mole total de la phase considérée) de liquide et de gaz qui se sont équilibrées, et sont donc identiques pour toutes les espèces du système. En utilisant deux espèces i et j présentes dans le gaz injecté, on peut lever cette indétermination afin de calculer le rapport $N^L/N^G$.

En couplant les équations (1) de $F^D$ pour deux espèces i et j, on peut exprimer le rapport molaire dans la phase gaz entre ces deux espèces:

$$\frac{n_i^L}{n_j^L} = \frac{n_i^T - n_i^G}{n_j^T - n_j^G} = \frac{n_i^T}{\left(\dfrac{N^L}{N^G.K_i}+1\right)} . \frac{\left(\dfrac{N^L}{N^G.K_j}+1\right)}{n_j^T}$$

puis,

$$\frac{N^L}{N^G} = K_i.K_j . \frac{\left(n_i^T - \dfrac{n_i^G}{n_j^G}.n_j^T\right)}{\left(K_j.\dfrac{n_i^G}{n_j^G}.n_j^T - K_i.n_i^T\right)}$$

Selon l'invention on mesure la fraction molaire de différentes espèces dans la phase gaz ($y_i$). Pour les espèces injectées dans le réservoir géologique et en abondance négligeable dans le réservoir de stockage, on considère que:

$$n_i^T = n_i^0$$

où $n_i^0$ correspond au nombre de mole total injecté, qui est un paramètre connu. De plus, les rapports molaires entre constituants injectés au temps initial (fin de l'injection=$t_0$) étant équivalents aux rapports de fractions molaires de ces constituants dans le gaz injecté, d'où:

$$\frac{n_i^0}{n_j^0} = \frac{y_i^0}{y_j^0}$$

On peut alors écrire:

$$\frac{N^L}{N^G} = K_i . K_j . \frac{\left( \dfrac{y_i^0}{y_j^0} - \dfrac{y_i}{y_j} \right)}{\left( K_j . \dfrac{y_i}{y_j} - K_i . \dfrac{y_i^0}{y_j^0} \right)} \qquad (2)$$

Pour la mise en application de cette méthode pour un stockage de $CO_2$, le procédé de surveillance comporte essentiellement les étapes suivantes :

    1. Mesures de fractions molaires de deux gaz rares (He, Ar) dans le gaz à injecter, avant injection (t=0) ; qui caractérise l'état initial du réservoir de stockage avant injection du $CO_2$.
    2. Mesures des fractions molaires des deux gaz rares (He, Ar) dans le gaz injecté, après injection ; et
    3. Détermination de la quantité de l'espèce à stocker ($CO_2$) dissoute à un instant t à partir des fractions molaires.

Ces étapes sont détaillées ci-après pour l'exemple du $CO_2$ en tant qu'espèce à stocker.

1. Mesures de fractions molaires de deux gaz rares (He, Ar) avant injection (t=0)

On réalise des mesures de fractions molaires des deux gaz rares (He, Ar) dans le gaz à injecter, avant injection (t=0). Ces mesures caractérisent l'état initial du gaz injecté de stockage avant son injection.

2. Mesure des fractions molaires des deux gaz rares (He, Ar) après injection

Après l'injection, on prélève au moins un échantillon de gaz présent dans une zone du sous-sol susceptible d'être atteinte par le $CO_2$, et l'on mesure les fractions molaires des deux gaz rares (He, Ar) au sein de ce premier échantillon de gaz.
Pour réaliser ce prélèvement, on utilise au moins un puits de surveillance dans lequel on immerge un préleveur de fonds permettant de récupérer le gaz en présence, sans perturber l'équilibre physico-chimique du système.
Ce puits permet de placer le préleveur dans une zone du sous-sol susceptible d'être atteinte par le $CO_2$. Il peut s'agir d'une zone située dans le réservoir où le $CO_2$ est censé être stocké, ou une zone située au dessus, de façon à détecter une fuite par exemple,
**[0049]** Cette étape peut être répétée à différents instants, et éventuellement à différents puits de surveillance.

3. Détermination de la quantité de $CO_2$ dissoute à un instant t à partir des fractions molaires.

Grâce à la mesure des fractions molaires en ces deux gaz rares (He, Ar) dans le gaz injecté (t=0) et dans la phase gaz du réservoir à un instant t de la vie du stockage, on peut déterminer le rapport $N^L/N^G$ au moyen de l'équation (2).
Puis, on utilise cette valeur de $N^L/N^G$ dans l'équation (1), pour déterminer la fraction de $CO_2$ dissous $F^D CO_2$ par:

$$F_{CO2}^D = \frac{1}{\left( \dfrac{N^L}{N^G . K_{CO2}} + 1 \right)} \qquad (4)$$

Selon l'invention, on peut également utiliser d'autres gaz rares que l'hélium et l'argon, tels que le néon, le krypton et/ou le xénon. On peut également utiliser un gaz rare et le $CO_2$.
Dans ce cas de figure, on remplace le rapport $N^L/N^G$ de l'équation (1) par son expression (2). Ainsi on obtient que la fraction de $CO_2$ dissous $F^D CO_2$ à l'instant t s'écrit :

$$F_{CO_2}^{D} = \frac{\left(1 - \frac{y_{CO_2}}{y_j} \cdot \frac{y_j^0}{y_{CO_2}^0}\right)}{\left(1 - \frac{K_{CO_2 i}}{K_j}\right)}$$ (5)

avec

- $y_{CO2}$ et $y_j$ les fractions molaires du $CO_2$ et du gaz rare j dans la phase gaz à un instant t ;
- $y^0_{CO2}$ et $y^0_j$ les fractions molaires du $CO_2$ et du gaz rare j dans le gaz injecté à l'instant $t_0$ (avant injection).

La première méthode (sans mesure de $CO_2$) présente un avantage qui est de s'affranchir de tous les effets bio-géochimiques qui pourraient affecter la teneur en $CO_2$ dans le gaz, et qui biaiseraient la quantification du $CO_2$ dissous.

**Application**

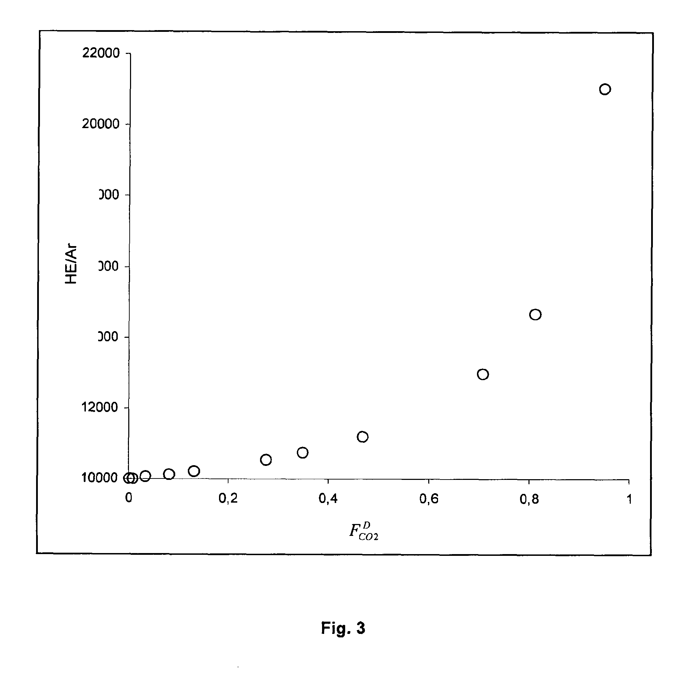

La figure 3 illustre un résultat du procédé selon l'invention. L'axe des abscisses représente la fraction de $CO_2$ dissoute $F^D_{CO2}$ l'axe de l'ordonnée représente le rapport élémentaire He/Ar dans la phase gaz. Les calculs ont été faits dans les conditions suivantes : Température T=60°C ; pression P=100bar ; salinité S=1 mol/Kg

Avant injection, le gaz à injecter à une teneur initiale en $CO_2$ de 99,98%. Il comporte 100ppm d'hélium et 100 ppm d'argon.

Les constantes de Henry ont été calculées de façon connue sur la base de données bibliographiques, en fonction de la pression, de la température et de la salinité pour le $CO_2$, et en fonction de la température et de la salinité pour l'hélium et l'argon.

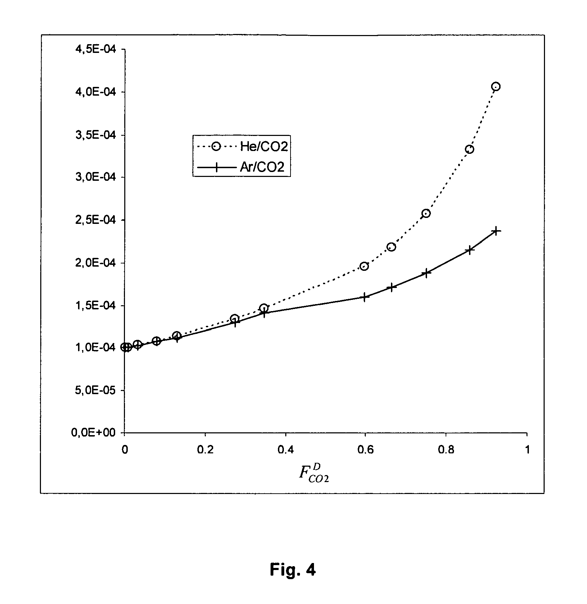

La figure 4 illustre un résultat du procédé selon l'invention, lorsque l'on utilise qu'un seul gaz rare (He ou Ar) : l'axe des abscisses représente la fraction de $CO_2$ dissoute $F^D_{CO2}$, l'axe des ordonnées représente le rapport élémentaire He/CO2 ou $Ar/CO_2$ dans la phase gaz.

**Revendications**

1. Procédé de stockage géologique d'un gaz contenant une espèce à stocker et au moins un gaz rare, dans lequel on injecte ledit gaz dans une formation du sous-sol contenant au moins un liquide, **caractérisé en ce que** l'on surveille le devenir de ladite espèce à stocker dans le sous-sol en réalisant les étapes suivantes :

    i. avant ladite injection, on mesure au sein dudit gaz à injecter une fraction molaire dudit gaz rare et une fraction molaire d'une espèce autre que ledit gaz rare, ladite espèce étant un second gaz rare ou l'espèce à stocker ;
    ii. après ladite injection, on prélève au moins un échantillon de gaz présent dans une zone du sous-sol susceptible d'être atteinte par l'espèce à stocker sous sa forme gazeuse, et l'on mesure au sein dudit échantillon une fraction molaire dudit gaz rare et une fraction molaire de ladite espèce autre que ledit gaz rare ;
    iii. on détermine la fraction de l'espèce à stocker dissoute dans ledit liquide à partir desdites fractions molaires, au moyen de la loi de Henry, de la constante de Henry de l'espèce à stocker $K_{CO2}$ et de la constante de Henry dudit gaz rare $K_i$.

2. Procédé selon la revendication 1, dans lequel on détermine la fraction $F^D_{CO2}$ de l'espèce à stocker dissoute dans ledit liquide à partir des mesures de fraction molaire dudit gaz rare et de fraction molaire dudit second gaz rare, en déterminant un rapport d'un nombre de mole total dans ledit liquide ($N^L$) sur un nombre de mole total dans ledit gaz ($N^G$), au moyen desdites fractions molaires, puis en utilisant la formule suivante :

$$F_{CO2}^{D} = \frac{1}{\left(\dfrac{N^L}{N^G \cdot K_{CO2}} + 1\right)}$$

**3.** Procédé selon la revendication 2, dans lequel on détermine ledit rapport au moyen de la formule suivante :

$$\frac{N^L}{N^G} = K_i . K_j . \frac{\left( \dfrac{y_i^0}{y_j^0} - \dfrac{y_i}{y_j} \right)}{\left( K_j . \dfrac{y_i}{y_j} - K_i . \dfrac{y_i^0}{y_j^0} \right)}$$

Avec :

o $y_i$ et $y_j$ les fractions molaires dudit gaz rare et dudit second gaz rare dans la phase gaz à un instant t ;
o $y^0_i$ et $y^0_j$ les fractions molaires dudit gaz rare et dudit second gaz rare dans le gaz injecté avant injection ;
o $K_j$ la constante de Henry du second gaz rare.

**4.** Procédé selon la revendication 1, dans lequel on détermine la fraction de l'espèce à stocker dissous $F^D_{co2}$ à partir des mesures de fraction molaire dudit gaz rare et de fraction molaire de l'espèce à stocker, au moyen de la formule suivante :

$$F^D_{CO_2} = \frac{\left( 1 - \dfrac{y_{CO_2}}{y_i} . \dfrac{y_i^0}{y_{CO_2}^0} \right)}{\left( 1 - \dfrac{K_{CO_2}}{K_i} \right)}$$

avec

o $y_{CO2}$ et $y_i$ les fractions molaires du l'espèce à stocker et du gaz rare i dans la phase gaz à un instant t ;
o $y^0_{CO2}$ et $y^0_i$ les fractions molaires du l'espèce à stocker et du gaz rare i dans le gaz injecté à l'instant $t_0$ (avant injection).

**5.** Procédé selon l'une des revendications précédentes, dans lequel ladite espèce à stocker est du $CO_2$ ou du méthane.

**6.** Procédé selon l'une des revendications précédentes, dans lequel ledit gaz rare est de l'hélium, du néon, de l'argon, du krypton ou du xénon.

Fig. 1

Fig. 2

**Fig. 3**

**Fig. 4**

Europäisches
Patentamt

European
Patent Office

Office européen
des brevets

**RAPPORT DE RECHERCHE EUROPEENNE**

Numéro de la demande

EP 12 29 0127

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | FR 2 827 960 A1 (INSTITUT FRANCAIS DU PETROLE) 31 janvier 2003 (2003-01-31) * le document en entier * ----- | 1-6 | INV. E21B47/10 |
| | | | **DOMAINES TECHNIQUES RECHERCHES (IPC)** |
| | | | E21B B65G |

Le présent rapport a été établi pour toutes les revendications

| Lieu de la recherche | Date d'achèvement de la recherche | Examinateur |
|---|---|---|
| La Haye | 26 juin 2012 | Rampelmann, Klaus |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 29 0127

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-06-2012

| Document brevet cité au rapport de recherche | Date de publication | Membre(s) de la famille de brevet(s) | Date de publication |
|---|---|---|---|
| FR 2827960     A1 | 31-01-2003 | EP     1415150 A2<br>FR     2827960 A1<br>JP     4364636 B2<br>JP  2004536321 A<br>US  2004166582 A1<br>WO    03010534 A2 | 06-05-2004<br>31-01-2003<br>18-11-2009<br>02-12-2004<br>26-08-2004<br>06-02-2003 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

• FR 2827960